# EUROPEAN PATENT APPLICATION

(11) **EP 3 659 851 A1**
(43) Date of publication of application: **03.06.2020**
(21) Application number: 18208545.6
(22) Date of filing: 27.11.2018
(51) Int. Cl.: B60L 7/18, B60L 7/26, B60L 15/20

(54) **CONTROL UNIT FOR CONTROLLING A BRAKING SYSTEM, VEHICLE COMPRISING THE CONTROL UNIT AND METHOD OF OPERATING THE VEHICLE**

(71) Applicant: eMining AG, 3627 Heimberg (CH)
(72) Inventor: Kissling, Franz, 3627 Heimberg (CH); Zaugg, Konrad, 3624 Schwendibach (CH); Blaser, Lukas, 3110 Münsingen (CH); Miauton, Roger, 8308 Illnau (CH); Bachofen, Marius, 8717 Benken (CH); Lohmeier, Johannes, 8006 Zürich (CH); Sambeth, Thomas, 8307 Effretikon (CH); Sutter, Andreas, 2502 Biel-Bienne (CH)
(74) Representative: Schulz Junghans Patentanwälte PartGmbB

(57) **Abstract**

The invention concerns a control unit (1) for controlling a braking system in a recuperation mode of a driving vehicle (30), which is adapted to control the braking power of a first braking means (3) set up as a recuperating generator and the braking power of a second braking means (4) set up as a mechanical brake by the use of at least one physical parameter being effective during the driving operation, in order to distribute the total braking power between the first braking means (3) and the second braking means (4) and thus adjusting the proportionate braking power of the two braking means (3,4) to the total braking power.

The invention also concerns a vehicle comprising a control unit, a method of operating the vehicle and the use of the control unit.

## Description

The invention concerns a control unit for controlling a braking system. In addition, the invention concerns a vehicle comprising the control unit, a method of operating the vehicle and the use of the control unit.

In particular for environmental reasons it is becoming increasingly necessary to reduce CO₂ emission. One important source of CO₂ emissions are motor vehicles powered by combustion engines. In the field of vehicles for transportion of people and/or goods battery electric vehicles are already known but not widespread. One important problem with the use of battery electric vehicles is battery charging.

One disadvantage is that energy supply to the battery is usually realized by using a public power network, so that battery electrical vehicles are not suitable without appropriate charging possibilities. Another disadvantage is that charging is in most cases very time consuming because of the lack of highspeed charging possibilities, which results in a limited use of the vehicle. Both aspects are all the more important the higher the weight of the vehicle, because a vehicle's weight is correlated to the electrical energy needed to operate the vehicle.

For these reasons, battery electrical vehicles are essentially unknown in the field of lorries, dump trucks or similar vehicles, which have heavy weight and are used in difficult driving environments, like for example mining or construction sites. These circumstances result in very energy consuming driving operation with high energy costs.

Dumpers used in the field of mining with a payload 60 tons or more generally use conventional diesel engines to realize driving power. For braking or speed reduction the use of braking power of the diesel engine plus additional mechanical brakes, like multiple disc brakes, or electrical resistance braking is common.

It is known in general, that while braking a vehicle mechanical energy can be converted to electrical energy by means of one or more generators.

US 2004 0 225 435 A1 shows a traveling system consisting of a driving vehicle, which is a dump truck, and a power supply section, which is an assistance vehicle, that is capable to be connected or disconnected to the driving vehicle and therefore supports the driving vehicle in heavy-duty driving mode with additional power.

US 9 744 872 B1 shows self-propelling work machine, in form of a truck, having an electrical drive, a generator drivable by an internal combustion engine and braking apparatus for braking the working machine. The braking apparatus comprises a regenerative brake and a mechanical brake. A braking control mechanism connects or disconnects a mechanical brake.

The problem to be solved by the present invention is to provide a system which is adapted to control a vehicle in an energy-optimized manner.

The problem is solved by a control unit for controlling a braking system in a recuperation mode of a driving vehicle according to claim 1, a vehicle comprising the control unit according to claim 10, a method of operating the said vehicle according to claim 12 and the use of the control unit according to claim 15. Advantageous embodiments of the control unit are given in subclaims 2 to 9. An advantageous embodiment of the vehicle is given in subclaim 11. Advantageous embodiments of the method of operation are given in subclaims 13 and 14.

A first aspect of the invention is a control unit for controlling a braking system in a recuperation mode of a driving vehicle. The control unit is adapted to control the braking power of a first braking means, set up as a recuperating generator, and the braking power of a second braking means, set up as a mechanical brake, by the use of at least one physical parameter being effective during the driving operation, in order to distribute the total braking power between the first braking means and the second braking means and thus adjusting the proportionate braking power of the two braking means to the total braking power.

It is preferred that the control unit is adapted to control the two braking means automatically, which means that there is no further external input necessary except the said physical parameter of the driving operation. This does not exclude the possibility that the control unit uses maximum and/or minimum values as well as nominal values that are given to the controlling operation for example by the driver or operator.

Being effective means according to the invention that the physical parameter influences the driving operation of the vehicle, in particular the braking operation and the braking power needed to hold or reduce the vehicle's velocity. It may also be that the parameter allows predictions to be made about the stress of the vehicle's aggregates during the driving operation. It is also possible that physical parameters are used that are related to the properties and conditions of the driving surface, like unevenness or slip resistance.

The braking power is the power that is needed to hold or reduce the velocity of a vehicle. While braking, in general, kinetic energy of the vehicle is converted by a braking system via mechanical energy to for example heat in the case of a mechanical brake. According to the invention the total braking power is defined as the sum of the braking power of the two braking means if only the mechanical brake and the recuperating generator are provided as the braking means of the respective vehicle.

A recuperating generator is also known as a regenerative brake. The generator converts mechanical energy, which results for example from the kinetic energy of a vehicle running downhill, to electrical energy, which can be used to charge an energy storage unit like a battery or can be used in order to power other aggregates. Simultaneously, when braking by the generator, the generator has a braking effect and is decelerating the velocity. In one embodiment, the generator can also be adapted to be used in the mode of an electrical motor, when driving force is needed instead of braking. The first braking means can be realized for example by a permanent synchronous machine.

The second braking means is at least one mechanical brake. Advantageously wearless mechanical brakes are used. The mechanical brake can for example be a wet operation multiple disc brake.

Both braking means are adapted to work in parallel, if necessary. The control unit adjusts the proportionate brake power distribution between the two braking means. Also, the control unit is adapted to control both braking means in a way that maximizes the electrical energy yield and at the same time preserves the vehicle's components from damage by the use of at least one physical parameter. It is preferred that several parameters are used for the controlling process. In doing so the control unit prohibits that the velocity and/ or acceleration exceeds a given maximum velocity value beyond permissible tolerances. This means, for example, that in the case of a fully charged vehicle battery, the control unit will automatically increase the braking power of the mechanical brake and lower the braking power of the recuperating generator. In case of a low slope of the driving surface and/ or a low charged battery the control unit will reduce the braking power of the mechanical brake to nearly zero, so that the braking effect is nearly totally realized by the generator and energy yield is increased. Preferably, all braking power distribution states between 100% first braking means braking power and 0% second breaking means braking power and vice versa are possible.

According to the invention it is not excluded that the current braking power is compared to a braking power defined by the control unit and that the braking power defined by the control unit is updated, so that at least one braking means is regulated.

In one embodiment the control unit is adapted to request the maximum portion of the total braking power from the first braking means.

In other words, the control unit is adapted to prefer the braking effect of the recuperating generator in distributing the total braking power. That means that as long as permitted due to the current conditions of the driving operation, like for example vehicle mass, acceleration, velocity and/or properties of the driving surface, the first braking means is preferred, as long as no other physical parameter used by the control unit induces an additional, increased or alternative use of the mechanical brake.

The advantage of preferring the braking effect of the generator lies in the maximization of the electrical energy yield. The electrical energy is may be stored in an energy storage unit and used to drive the vehicle and/or the vehicle's working equipment.

It is not excluded by the invention that the control unit prefers the mechanical brake even though the battery is not totally charged, if one or more physical parameters require this way of operating the braking means. The control unit controls both braking means.

In one embodiment the physical parameter involved in the controlling process is the total vehicle mass.

A higher vehicle mass results in higher kinetic energy while the vehicle is going downhill. A higher kinetic energy results in a higher total braking power needed to hold or reduce the vehicle velocity.

The total vehicle mass is the sum of the mass of the vehicle itself and the mass of its current load. The mass of the current load is may be measured by internal scales of the vehicle itself. It is also possible that mass is measured by external devices and is made available to the control unit, for instance via manual input.

In a further embodiment the physical parameter involved in the controlling process is the current vehicle velocity.

That means that the change of velocity over time may also be used, which is the acceleration of the vehicle or at least one of its tires.

The higher the velocity and therefore the kinetic energy the higher the total braking power needed to hold or reduce the velocity of the vehicle.

Besides the current vehicle velocity, it is possible to alternatively or additionally use the deviation between a defined maximum velocity and the current velocity. The velocity deviation gives additional information for an accurate controlling behavior.

In one embodiment the physical parameter involved in the controlling process is the driving surface slope of a current driving situation and/or a prospective driving situation.

The driving surface slope of the current driving situation may be measured by inclination- or angle-measuring devices like inclinometers, which can be devices related to the vehicle. The steeper the slope, the greater is the acceleration and accordingly the required total braking power.
It is also possible to control the braking behavior by at least one given predefined slope value.

The prospective driving situation means in the sense of this invention in other words the expected or anticipated driving situation in the near future. The prospective driving situation can for example be integrated in the braking power controlling by driving surface profiles that are for example digitally deposited for the use by the control unit. Those profiles may comprise besides steepness of the driving surface slope additional information about the route to be driven depending on the position on the track, like for example adhesion properties of the surface, curve radii, curve inclination and others. This embodiment is especially preferred when the same route has to be driven several times, as it is common for example in mining. It is also possible to use data from navigation systems and/or geo information systems. The advantage of using information regarding the prospective driving situation is that the controlling process becomes forward-looking and therefore accurate and safe.

In a further embodiment the physical parameter involved in the controlling process is the degree of elastic deformation of a vehicle's spring and/or the lift or pressure values of a vehicle's shock absorber, which are related to the vertical movement of the driving vehicle relative to the driving surface.

The required total braking power may also be related to the properties and conditions of the driving surface. This is especially important in difficult driving environments, which means for example driving surfaces with large and/or deep potholes. It is advantageous in these difficult environments to integrate direct or indirect measured data from springs and/ or shock absorbers of the driving vehicle into the controlling process due to avoid damage to vehicle components.

A physical parameter involved in the controlling process may be the longitudinal slip of at least one tire of the vehicle on the driving surface.

The longitudinal slip is usually measured as the difference between the surface speed of a vehicle's tire and the driving surface and in general given as a percentage. The higher the slip the lower is the adhesive force between the vehicle's tires and the driving surface. The total braking force needed and the proportionate distribution of the total braking power between the two braking means may be adapted to the slip rate.

Further, the physical parameter involved in the controlling process may be a number of trips counted by a trip counter.

A trip counter according to the invention first of all counts the number of uphill and downhill drives of the vehicle. It is also possible that the counter measures the whole distance driven in a given time period or gives similar information.

In another embodiment the physical parameter involved in the controlling process is the current remaining capacity of the battery of the vehicle.

The remaining, or in other words residual, capacity of a battery gives the amount of electricity that a battery still can store until it is fully charged. As a corresponding value the state of charge may be used in the controlling process. The lower the remaining capacity the more braking power from the mechanical brake is needed. This controlling behavior can also be realized by a defined residual capacity value.

The advantage of using the remaining capacity for controlling the braking power distribution between the two braking means is to avoid overcharging of the battery or battery system connected to the generator. Overcharging can reduce operating life time of a battery and/or reduce the general capacity of the battery. The lower the general capacity of the battery the less energy can be stored while the vehicle is going downhill. In the case of an electrically-operating dump truck, the battery is one of the most cost-intensive components and therefore has to be monitored and operated carefully.

The electrical energy converted by the recuperating generator may be stored in at least one battery, which is integrated in the vehicle. It is also possible that the vehicle comprises a battery management system that controls several batteries and therefore the state of charge of several batteries. In this case the control unit is may connected to the battery management system in a control related way.

In one embodiment the physical parameter involved in the controlling process is the temperature of the mechanical brake, the recuperating generator and/or the battery of the vehicle.

The advantage of embedding temperature information is that temperature often gives appropriate information about the stress of a technical component. According to the invention the control unit may use the temperature information to balance the use of the two braking means.

On one hand, the control may be adapted to lower the portion of braking power realized by the mechanical brake when the temperature of the mechanical brake has reached a predetermined value. On the other hand, the control unit may be adapted to lower the portion of braking power realized by the recuperating generator when the temperature of the recuperating generator has reached a predetermined value. That means, both of these controlling behaviors can also be realized by defined mechanical brake and/ or recuperating generator maximum temperature values. Both control mechanisms do not exclude each other.

Also, if the temperature of the battery or battery system has reached a predetermined value the braking power of the recuperating generator should be lowered by the controlling process, to avoid a so-called thermal runaway, an effect that results in an uncontrolled overheating of the battery, which damages the battery permanently.

In a special embodiment the control unit additionally controls a heating and cooling system of the battery or battery system to realize optimal and steady temperature.

According to the invention several temperature values can be included in the controlling process at the same time.

In another embodiment the control unit is adapted to control the total braking power so that a defined maximum vehicle velocity is not exceeded.

The control unit may be adapted to control the total braking power so that the deviation between the current vehicle velocity and a defined vehicle velocity is less than 15%, in particular less than 10%, of the defined maximum vehicle velocity.

The maximum vehicle velocity can be 20 km/h. It is also possible to have a maximum velocity of 40 km/h.

The maximum vehicle velocity value can be one fixed time and position independent value. It is also possible that the defined maximum velocity value is depending on the current position of the vehicle and therefore a maximum velocity function or profile which may be connected to the driving surface profile. The advantage is that due to minimum velocity deviation, the vehicle controlled by the control unit will reach its destination just in time.

It is also possible that the driver of the vehicle can influence the maximum velocity while driving and due to the current driving situation in a way comparable to a speed control system known from automobiles.

Another possibility is that the maximum velocity value is given by an external operator, who is not the driver but operates the vehicle from a remote control panel.

The maximum velocity value can be supplied to the control unit for example by an interface integrated in the vehicle and connected to the control unit in a data transferable way.

In a further embodiment the control unit is adapted to control the driving power of at least one power unit like an electrical motor and/or a combustion engine.

Besides controlling the braking behavior, the control unit may control the driving power as well. The driving unit of a vehicle can for example be an electrical motor and/or a combustion engine. By controlling the driving power, and therefore the kinetic energy, the control unit indirectly controls the braking power provided by this power unit, too.

Besides the power unit that drives the vehicle, the control unit can also be adapted to control secondary power units that operate the vehicle's working equipment, such as, for example, to lift a dump truck's loading space.

In another embodiment the control unit is adapted to control a charging and/or discharging process, wherein the vehicle's battery is charged and/or discharged by the use of a power network.

Furthermore, the control unit may be adapted to control a controlling process in which a battery or battery system of a first vehicle is charged by the use of a battery or battery system of a second vehicle.

The advantage of this embodiment is that if a power network is missing, which can be a typical situation in mining for example, an electrical energy transfer between several vehicles is possible.

In another embodiment the control unit is also adapted to control pre-charging of a power inverter.

A power inverter according to the invention is an electronic component located in the current path between the recuperating generator and the battery and/or the electrical motor and the battery. An inverter is a component that prepares or converts electrical energy for use and/or storage, in particular by changing direct current (DC) to alternating current (AC) and vice versa.

A second aspect of the invention is a vehicle, in particular a lorry or dump truck for loading and transporting dump material. The said vehicle comprises a control unit as claimed in at least one of the described embodiments and a first braking means set up as a generator in order to realize a recuperation mode of the driving vehicle to convert mechanical energy to electrical energy as well as to realize a braking power by means of the recuperating generator. The vehicle furthermore comprises a second braking means set up as a mechanical brake in order to realize further braking power, and at least one battery to store at least partially the recuperated electrical energy converted by the first braking means.

It may be that the vehicle comprises a 5t and 700 kWh battery. The total weight of such a vehicle may be up to 110 tons.

According to the invention, it may be possible to generate 77 MWh of CO₂-free electrical energy by recuperation during downhill travel.

An advantage of the said vehicle is, that it is possible to save 50.000 litters of diesel and therefore 130 tons of CO₂ per year, by using recuperated energy to operate the vehicle Another advantage is, that maintenance costs are reduced compared to dumper trucks working with diesel engines. In addition, this kind of vehicle is considerably more quiet than conventional dumper trucks with diesel engines. Thus, the said vehicle is an ecological and economical machine, especially in the field of mining, in which it may be necessary to be able to master gradients up to 15% under adverse conditions fully loaded.

In a further embodiment the said vehicle comprises at least one power unit, which is connected to the control unit in a control-related way and which is adapted to be controlled by the control unit.

This means, in other words, that the control unit is, besides controlling the braking power distribution between the braking means in a decelerating mode, adapted to control the required power to operate the vehicle in an accelerating mode. The power unit to be controlled can be an electrical motor as well as a combustion engine.
It may be that the power unit is an electrical motor and that the electrical motor is the same unit as the recuperating brake working just the other way around.

Another aspect of the invention is a method of operating the said vehicle. The vehicle is driving uphill, taking up a load to a first position and running downhill to a second position, which is lower than the first position, with increased mass. The kinetic energy of the vehicle on its way down is at least partially converted to electrical energy by means of the recuperating effect at braking the vehicle by means of the recuperation generator, and the electrical energy is at least partially stored in the battery of the vehicle. In this method of operating the vehicle the control unit controls the braking power of the recuperating generator and the mechanical brake.

In other words, the control unit controls the effective use of the kinetic energy of a loaded and therefore heavy-weighted vehicle, when running down a hill loaded with for example dump material.

Due to the load of the truck the vehicle has a higher potential energy in the first position compared to the second position in which the vehicle has a lower potential energy. When running downhill potential energy is converted to kinetic energy.

In another embodiment of the method of operating the vehicle, the vehicle at least partially uses the recuperated electrical energy of a prior downhill drive to drive uphill.

The recuperated energy can be used to accelerate the vehicle, which is not necessarily but typically unloaded or less loaded and therefore lighter, uphill. This driving mode is typical for transporting mining goods or dump materials but is also typical in the field of construction. Depending on the general capacity of the battery or battery system and the concrete driving situation, the amount of recuperated electrical energy stored may be as high as the energy needed to drive the unloaded vehicle uphill, or even more.

In a further embodiment of the method, recuperated electrical energy of a downhill drive is supplied to a power network.

In particular, when there is more recuperated energy stored in the vehicle's battery than needed for the vehicle's driving operations, it is preferred that the energy that is not needed to power the vehicle is supplied to a power network. It is also possible that the energy is supplied to another vehicle's battery or to an external energy storage unit, which can act like an electrical energy service station on a mining or construction site without connection to a power network.

In another embodiment it is also possible that the method of operating the vehicle is driverless.

Driverless means that the method of operating the vehicle is automated in a way that it is not necessary to have a vehicle's driver inside the vehicle. Especially in a field of applications like mining, where a dump truck is driving the same route under the same or nearly the same conditions several times, the use of several physical parameters allows completely automated operation.

Another aspect of the invention is the use of the control unit according to the invention to control the braking of a vehicle, in particular of a lorry or dump truck for loading and transporting dump material.

A further aspect of the invention is a computer program, in particular an app, which can be uploaded to the internal, in particular non-volatile, memory of a digital computer, in particular a smartphone or a tablet computer, and which comprises a computer program code which, when executed on the digital computer, performs the steps of the procedure according to the invention.

The invention is explained below using the embodiment examples shown in the enclosed drawings.

It is shown in
- Fig. 1:: a schematic view onto a vehicle braking fully by means of a recuperating generator according to the invention,
- Fig. 2:: a schematic view onto a vehicle braking fully by means of a mechanical brake according to the invention,
- Fig. 3:: a schematic view onto a vehicle braking by means of a recuperating generator and by means of a mechanical brake in parallel according to the invention and
- Fig. 4:: a schematic view onto a vehicle actuated by a power unit according to the invention.

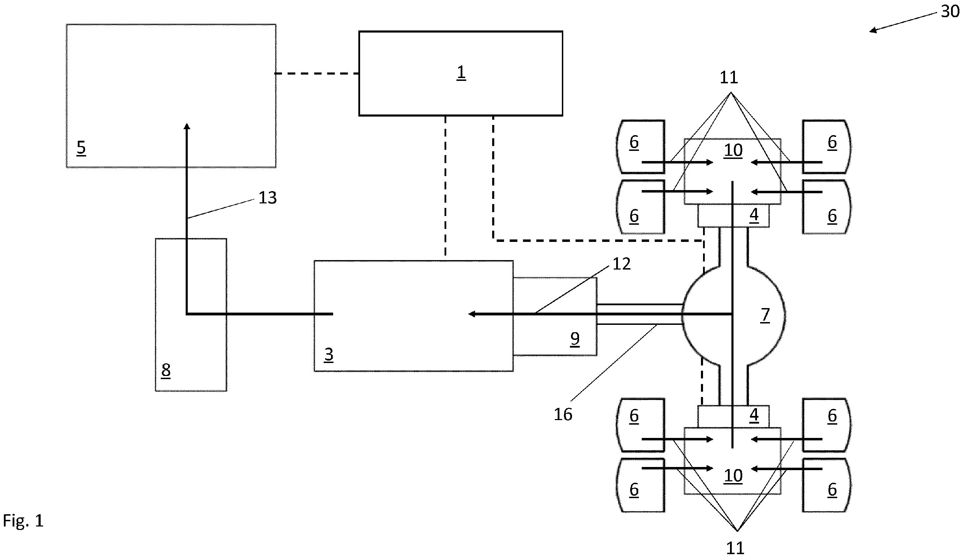

Figure 1 shows a schematic view onto a vehicle 30 fully operating in recuperation mode. The kinetic energy 11 of the vehicle 30 is transferred from the vehicle's tires 6 to a mechanical gear mechanism 10 located on an axis and further via an axle beam 7, a shaft 16 and a powershift transmission 9 to a first braking means 3, which is in the embodiment shown here a generator working in recuperation mode. The generator converts mechanical energy 12 to electrical energy 13, which is transferred via an inverter 8 to a battery 5, where the recuperated electrical energy 13 is stored.

The broken lines between the control unit 1 and the battery 5 of the vehicle 30, the first braking means 3 and the two second braking means 4, which are mechanical brakes, indicate that this connection is control related. The control unit 1 is connected to the first braking means 3 and the second braking means 4 to increase and/or decrease the braking power of these two means. Vice versa, the connection between the braking means 3,4 and the control unit 1 allows transfer of data from control-related physical parameters like temperature data from the braking means 3,4 to the control unit 1. The control unit 1 is, in the embodiment shown here, also connected to the battery 5, in order to transfer information regarding the remaining battery capacity and or other battery-related physical parameters. Not shown here is that the control unit 1 is also connected to other systems and components of the vehicle 30 like velocity measurement and internal scales, as examples.

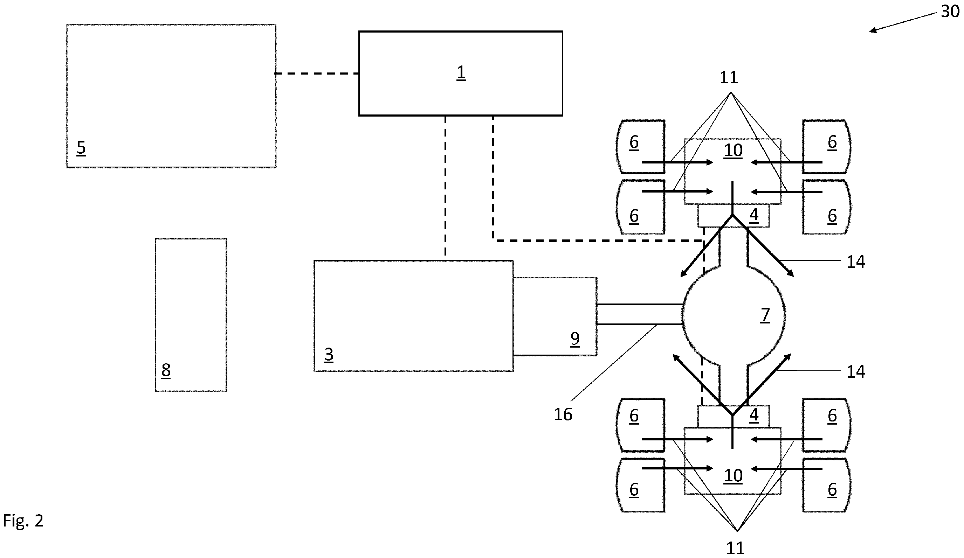

Figure 2 shows a schematic view onto a vehicle 30 fully braking by means of the second braking means 4, the mechanical brakes. This mode of operation might be the case if the battery 5 is fully charged or battery temperature is too high. In this mode of operation, no energy is transferred from the mechanical gear mechanism 10 via axle beam 7, shaft 16 powershift transmission 9, first braking means 3 and inverter 8 to the battery 5. The kinetic energy 11 of the vehicle 30 is converted to heat 14, which is no longer usable for the power and/or braking mechanism. The broken lines show that this process is controlled by the control unit 1, too. Reference number 6 refers to the tires.

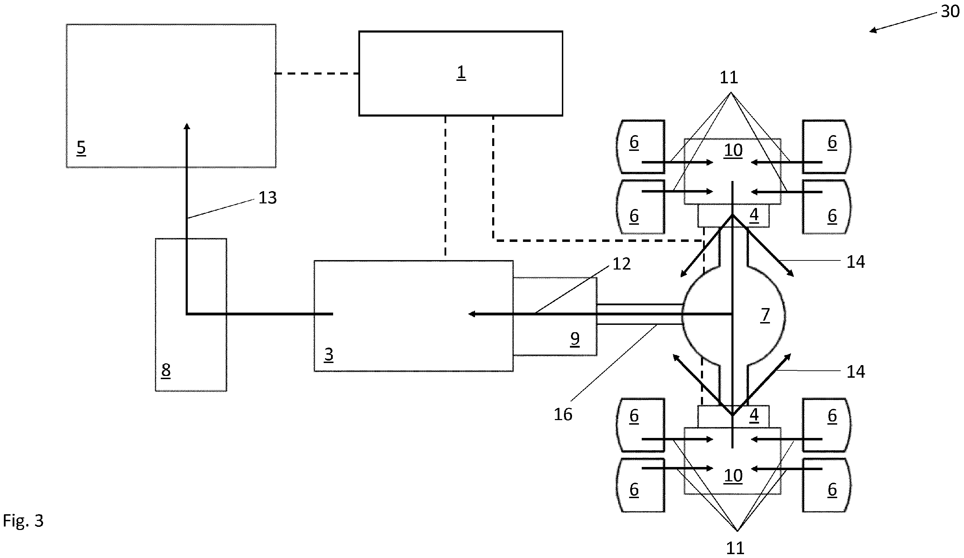

Figure 3 shows a mixed braking mode in which braking the vehicle 30 by a recuperating generator and a mechanical brake, the said first and second braking means 3,4, takes place at the same time. Both mechanisms work in parallel. The control unit 1 adjusts the proportionate distribution of the total braking power needed between the first and the second braking means 3,4. On the one hand, the transfer of kinetic energy 11 from the tires 6 via mechanical gear mechanisms 10, axel beam 7, shaft 16, powershift transmission 9 to the generator 3, and the transfer of generated electrical energy 13 to the inverter 8 and to the battery 5 is shown. On the other hand, Figure 3 shows that at the same time the mechanical energy 12 is partially taken by the second braking means 4, which are the mechanical brakes, and converted to heat 14. Again, it can be seen that the whole process is controlled by the control unit 1 via the control-related connections shown in broken lines.

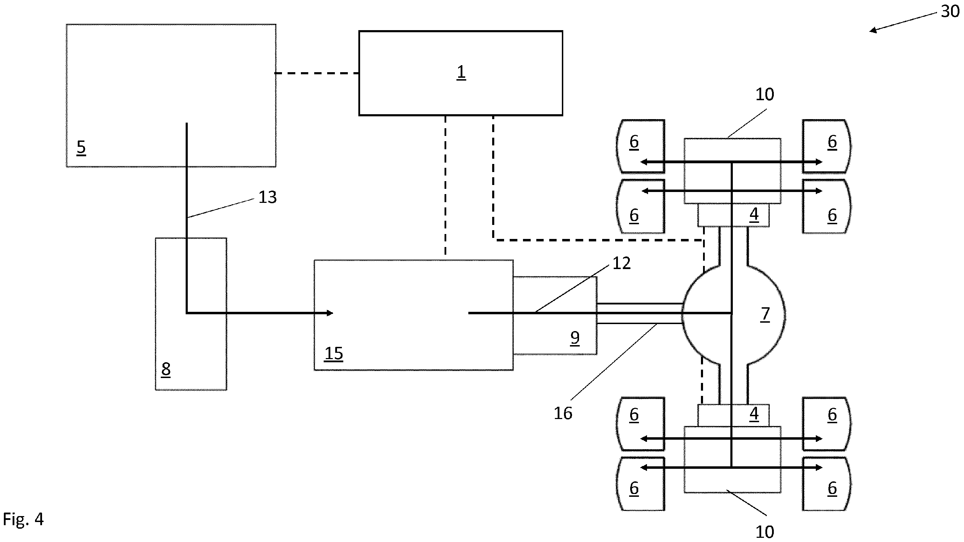

Figure 4 shows a schematic view on a vehicle 30 actuated by a power unit 15. The power unit 15 is driven by the electrical energy 13 that is transferred from the battery 5 of the vehicle 30 via the inverter 8. The power unit 15 converts the electrical energy 13 to mechanical energy 12, which is transferred via the powershift generator 9, the shaft 16, the axle beam 7 and the mechanical gear mechanisms 10, and drives the tires 6. The control unit 1 in this example controls the driving power needed to increase the vehicle velocity. The second braking means 4, the mechanical brake, is not in use.

### List of reference signs

- 1: control unit
- 3: first braking means
- 4: second braking means
- 5: battery
- 6: tire
- 7: axle beam
- 8: inverter
- 9: powershift transmission
- 10: mechanical gear mechanism

- 11: kinetic energy
- 12: mechanical energy
- 13: electrical energy
- 14: heat

- 15: power unit
- 16: shaft
- 30: vehicle

## Claims

1. Control unit (1) for controlling a braking system in a recuperation mode of a driving vehicle (30), which is adapted to control the braking power of a first braking means (3) set up as a recuperating generator and the braking power of a second braking means (4) set up as a mechanical brake by the use of at least one physical parameter being effective during the driving operation, in order to distribute the total braking power between the first braking means (3) and the second braking means (4) and thus adjusting the proportionate braking power of the two braking means (3,4) to the total braking power.

2. Control unit (1) according to claim 1,
**characterized in that**
the control unit is adapted to request a maximum portion of the total braking power from the first braking means (3).

3. Control unit (1) as claimed in at least one of the preceding claims,
**characterized in that**
the physical parameter involved in the controlling process is the total vehicle mass.

4. Control unit (1) as claimed in at least one of the preceding claims,
**characterized in that**
the physical parameter involved in the controlling process is the current vehicle velocity.

5. Control unit (1) as claimed in at least one of the preceding claims,
**characterized in that**
the physical parameter involved in the controlling process is the driving surface slope of
i) a current driving situation and/or
ii) a prospective driving situation.

6. Control (1) unit as claimed in at least one of the preceding claims, **characterized in that**
the physical parameter involved in the controlling process is the current remaining capacity of the battery (5) of the vehicle (30).

7. Control unit (1) as claimed in at least one of the preceding claims, **characterized in that**
the physical parameter involved in the controlling process is the temperature of
i) the first braking means (3),
ii) the second braking means (4) and/or
iii) the battery (5) of the vehicle (30).

8. Control unit (1) as claimed in at least one of the preceding claims, **characterized in that**
the control unit is adapted to control the total braking power so that a defined maximum vehicle velocity is not exceeded.

9. Control unit (1) as claimed in at least one of the preceding claims, **characterized in that**
the control unit (1) is adapted to control the driving power of at least one power unit (15) like an electrical motor and/or a combustion engine.

10. Vehicle (30), in particular a lorry or dump truck for loading and transporting dump material, comprising a control unit (1) according to at least one of the claims 1 to 9 and a first braking means (3) set up as a generator in order to realize a recuperation mode of the driving vehicle to convert mechanical energy (12) to electrical energy (13) as well as to realize a braking power by means of the recuperating generator, and a second braking means (4) set up as a mechanical brake in order to realize further braking power, and at least one battery (5) to store at least partially the recuperated electrical energy (13) converted by the first braking means (3).

11. Vehicle (30) according to claim 10 comprising at least one power unit (15), which is connected to the control unit (1) in a control related way and which is adapted to be controlled by the control unit (1).

12. Method of operating a vehicle (30) as claimed in at least one of the claims 10 and 11, wherein the vehicle (30) is driving uphill, taking up a load in a first position and running downhill to a second position, which is lower than the first position, with increased mass, whereby the kinetic energy (11) of the vehicle at least partially is converted to electrical energy (13) by means of the recuperating effect at braking the vehicle (30) by means of the recuperation generator, and whereby the electrical energy (13) is at least partially stored, and wherein the control unit (1) controls the braking power of the recuperating generator and the mechanical brake.

13. Method of operating a vehicle (30) according to claim 12, **characterized in that** the vehicle (30) is at least partially using the recuperated electrical energy (13) of a prior downhill drive to drive uphill.

14. Method of operating a vehicle (30) according to claim 12 and 13, **characterized in that** recuperated electrical energy (13) of a downhill drive is supplied to a power network.

15. Use of a control unit (1) according to at least one of the claims 1 to 9 to control the braking of a vehicle (30), in particular a lorry or dump truck for loading and transporting dump material.
